# EUROPEAN PATENT APPLICATION

(11) **EP 4 498 143 A1**
(43) Date of publication of application: **29.01.2025**
(21) Application number: 23187236.7
(22) Date of filing: 24.07.2023
(51) Int. Cl.: G02B 21/00, G02B 27/58

(54) **IMAGE SCANNING MICROSCOPY WITH SINGLE CHANNEL DETECTOR**

(71) Applicant: European Molecular Biology Laboratory, 69117 Heidelberg (DE)
(72) Inventor: ZIMMERMANN, Timo, 69126 Heidelberg (DE)
(74) Representative: Sonnenberg Harrison Partnerschaft mbB

(57) **Abstract**

The invention provides a microscope for point scanning a probe. The microscope comprises an illumination light path for directing at least one illumination beam to the sample; a detection light path for directing a detection light beam from the sample to a detector. A microlens array, comprising a plurality of microlenses, is arranged in the detection light path. Ones of the plurality of microlenses of the microlens array are optically coupled to the detector via an associated one of a plurality of optical fibers. Ones of the plurality of optical fibers have an optical path length. The optical path lengths of ones of the plurality of optical fibers differ by distances *Δsᵢ*.

## Description

### Field of the invention

The present invention relates to the field of image scanning microscopy (ISM).

### Background of the invention

The possibility of resolution improvements by image scanning instead of point scanning was postulated early on in the development of confocal microscopy [1,2]. In point scanning, a single illumination spot is scanned across a sample and detected with a point detector.

In recent implementations of image scanning microscopy (ISM), spatial detector arrays, e.g. arrays of point detectors spatially arranged e.g. in linear, rectangular or honeycomb arrangements, are used. These implementations are e.g. CCD-based spatial detector arrays [3], GaASP-based spatial detector arrays [4], or SPAD-based spatial detector arrays [5]. Using the spatial detector arrays enables collecting more of the fluorescence signal from the sample, which leads to increased resolution and a high signal-to-noise ratio. The spatially arranged elements of the spatial detector array generate a plurality of sub-images. An overall image is created by accounting for the position (i.e. spatial coordinates) of each of the detector elements of the spatial detector array.

Recent developments in ISM use multi-element detector arrays to spatially cover the detected light signal with up to 32 separate detectors. Both two-dimensional [4] as well as one-dimensional arrangements [5] of the elements of the detector array have been implemented. In the case of a one-dimensional array of the detector elements, a two-dimensional arrangement of microlenses and optical fibers connected to the one-dimensional array of the detector elements capture the light signal.

Using high numbers of separate ones of the detector elements in the ISM spatial detector arrays poses a challenge regarding the multi-channel architecture of modern confocal microscopes, as, for spectral imaging confocal microscopy, the number of the detector elements in the spatial detector arrays would need to be multiplied by the number of spectral channels (easily up to five spectral channels in current implementations).

A solution for spectral discrimination of detection light marketed by Abberior Instruments under the name of RAINBOW Detection (https://abberior-instruments.com/products/expert-devices/rainbow-detection/) uses up to four pairs of gradient-coated filters. The up to four pairs of filters are each connected to a detector. The pairs of filters allow to freely define wavelength ranges of fluoresced light to be detected between 400 nm and 800 nm and to freely distribute the amount of the detection light between the one or more detectors. In conjunction with image scanning, this solution results in high numbers of detection elements that pose a challenge for readout.

Importantly, spectral imaging confocal microscopy architectures, such as those implemented in the currently known solutions of Leica, Zeiss, Nikon and Olympus microscopes, cannot be used for image scanning as the spectral dispersion (by means of a prism or grating) of the signal is not compatible with image scanning detector arrays. Accordingly, the currently available detectors are connected to confocal scan-heads through additional ports. These additional ports bypass the spectral light path components and are instead spectrally defined by (switchable) bandpass filters which may allow sequential, but not simultaneous imaging of multiple channels.

### Summary of the invention

The present invention provides a way to make spatial image scanning information available through single point or single-channel detectors instead of spatial detector arrays. This reduces the number of detector elements in the spatial detector array and, in consequence, the number of separate raw data channels that transmit data to be processed. The invention provides an all-optical approach to performing image scanning microscopy with single point detectors (or single channel detectors).

The solution for image scanning microscopy can be integrated with known confocal spectral imaging solutions. The solution is compatible with spectral and other multichannel confocal light paths downstream of the fiber delay device. The use of de-zooming and/or collimating optics (see below) may achieve the compatibility.

According to the present disclosure, the spatial information of the detected light signal from a single diffraction limited illuminated point is converted into a temporal sequence of information that temporally encodes the spatial information as sub-signals at distinct time delays that can be sequentially detected by the single point detector.

This disclosure teaches a microscope for point scanning a probe. The microscope comprises an illumination light path for directing at least one illumination beam to the sample and a detection light path for directing a detection light beam from the sample to a detector. A microlens array, comprising a plurality of microlenses, is arranged in the detection light path. Ones of the plurality of microlenses of the microlens array are optically coupled to the detector via an associated one of a plurality of optical fibers. The optical fibers have an optical path length. The optical path lengths of ones of the plurality of optical fibers differ by distances (or length differences) *Δsᵢ.*

The distances *Δsᵢ* may be individually chosen. Individually choosing the distances *Δsᵢ* enables adjusting the distances *Δsᵢ* according to an intensity distribution of the detection light beam. The intensity distribution may relate to a intensity distribution in a cross-section of the detection light beam. For instance, in a region of the intensity distribution having a relatively high intensity, relatively larger ones of the distances *Δsᵢ* may be chosen. In another example, in another region of the intensity distribution having a relatively low intensity, relatively smaller ones of the distances *Δsᵢ* may be chosen.

The distances *Δsᵢ* may differ by an integer multiple of a unit distance (or length difference) *Δs*.

The detector may be a single point detector or single-channel detector.

The single point detector may comprise, for example, a photomultiplier tube, an avalanche photodiode, a single-photon avalanche diode, a GaAsP detector, or a combination thereof.

The microscope may comprise a processor configured to process an output signal of the detector for time-correlated single photon counting.

The microscope may further comprise a light source configured to provide the illumination light beam in the form of at least one laser pulse.

The light source may be configured to generate the at least one laser pulse at a repetition rate of smaller than or equal to 80 MHz.

The microscope may further comprise a dispersive element arranged in the detection light path.

A method of imaging a sample is also taught. The method comprises illuminating a sample with an illumination light beam; collecting a detection light beam from the sample; splitting the detection light beam into a plurality of signal beams; guiding ones of the plurality of signal beams along an associated one of a plurality of light paths, wherein the plurality of light paths have an optical path length, the optical path lengths differing between ones of the plurality of optical fibers by distances *Δsᵢ*; recombining the plurality of signal beams into a converted detection light beam; directing the converted detection light beam into a detector to generate an output signal; processing the output signal from the detector, using the method of time-correlated single photon counting, and decomposing the processed output signal to image the sample.

The method may further comprise selecting the distances *Δsᵢ* individually. The individually selected distances *Δsᵢ* may depend on the detection light beam, e.g., on an intensity distribution of the detection light beam.

The method may further comprise selecting the distances *Δsᵢ* to differ by an integer multiple of a unit distance *Δs*.

The method may further comprise processing an output signal of the detector to achieve time-correlated single photon counting.

The illuminating may further comprise providing the illumination beam in the form of at least one laser pulse.

The method may further comprise generating the at least one laser pulse at a repetition rate of smaller than or equal to 80 MHz.

The method may further comprise spectrally dispersing the converted detection light beam.

### Description of the Figures

Fig. 1 shows a microscope for image scanning.
Fig. 2 shows one possibility of distributing a point image on a microlens array connected to optical fibers of different optical path lengths (exemplary delays stated for different image areas).
Fig. 3 shows exemplary output data based on an output signal from the detector of the microscope shown in Fig. 1.
Fig. 4 shows a further aspect of the microscope.

### Detailed description

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

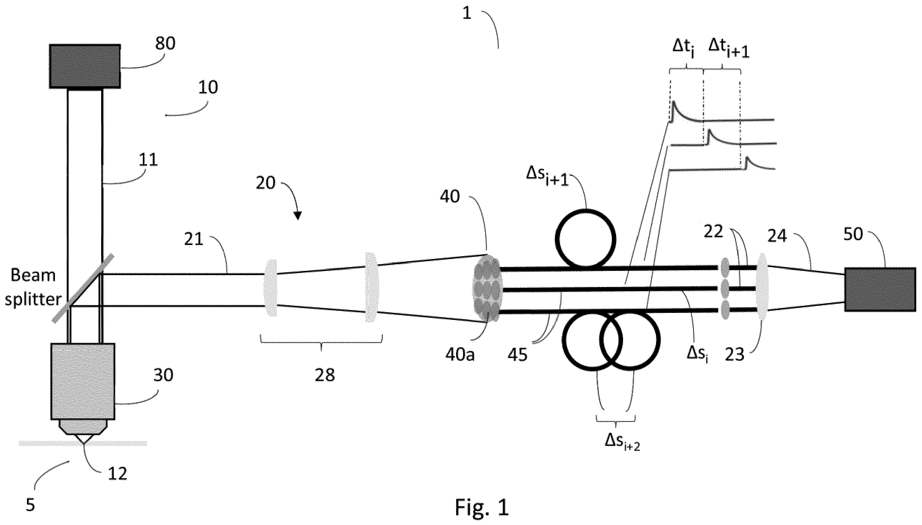

A microscope 1 for image scanning is shown in Fig. 1.

The microscope 1 may be a laser scanning microscope. For example, the microscope 1 may be a confocal laser scanning microscope. The microscope 1 may further be a variant of the confocal microscope, such as a 4Pi microscope or a STED microscope (Stimulated Emission Depletion Microscope). The 4Pi microscope enables resolution enhancement based on two opposing objective lenses and coherent superposition of both illumination light and detection light. The STED microscope enables resolution enhancement, independently from the optics of the microscope 1, based on selectively deactivating fluorophores in the sample.

The microscope 1 comprises at least one objective lens 30. The objective lens 30 is arranged to direct an illumination light beam 11 to a sample 5 to illuminate the sample 5. The objective lens 30 illuminates the sample 5 at an illumination point 12. The illumination point 12 is scanned across and/or through the sample 5.

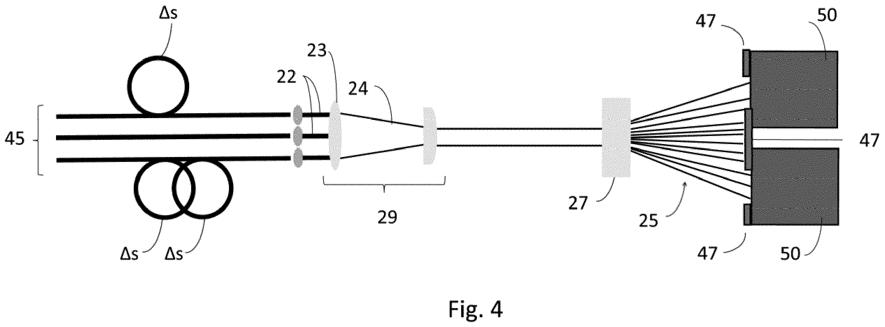

The objective lens 30 may further be arranged to collect light emitted by the sample 5 to direct a detection light beam 21 to a detector 50. In an alternative aspect of the invention, a further objective lens (not shown) is provided to collect light emitted by the sample 5 and to direct a detection light beam 21 to the detector 50. In yet another aspect (shown FIG. 4), the microscope 1 comprises a further one of the detectors 50.

The microscope 1 comprises a light source 80. The light source 80 may comprise a laser. The light source 80 may be a pulsed laser. The pulsed laser is configured to generate laser pulses. The light source 80 may be configured to provide an illumination beam 11 that comprises at least one laser pulse. In one aspect of the disclosure, the light source 80 may be configured to provide the at least one laser pulse at a repetition rate of smaller than or equal to 80 MHz; however, the repetition rate may be larger than 80 MHz. The repetition rate may be chosen based on considerations about detectable lifetimes and lifetime-dependent signal durations. When the repetition rate is increased, the detectable lifetime intervals are decreased (e.g., < 12.5 ns at the repetition rate of > 80 MHz) and signal pileup may happen. The laser pulse enables using Fluorescence Lifetime Imaging Microscopy (FLIM) to detect the temporally coded spatial information by time-correlated single photon counting (TCSPC).

In TSCPC, detection times of the individual photons relative to the laser pulse are recorded by means of a fast single-photon detector, such as a photo-multiplier tube (PMT) or a single photon avalanche photo diode (SPAD). The recordings are repeated for multiple ones of the laser pulses, resulting in a distribution or histogram of the number of detection times. This distribution or histogram can then be fitted to an exponential function that contains the lifetime as a parameter. Based on the fit, the lifetime may be estimated.

The illumination beam 11 travels along an illumination light path 10 and impinges on a sample 5. The illumination beam 11 excites fluorophores in the samples. The excited fluorophores result in fluorescence of the sample 5 upon the illumination light beam 11 impinging on the sample 5. If the sample is excited using the laser pulses, a fluorescence signal having a distinct signature in the lifetime domain is generated by the sample 5.

The light source 5 is configured to provide an illumination light beam 11 comprising light of one or more wavelengths. The one or more wavelengths of the illumination light beam 11 may be chosen according to the fluorophores to be excited.

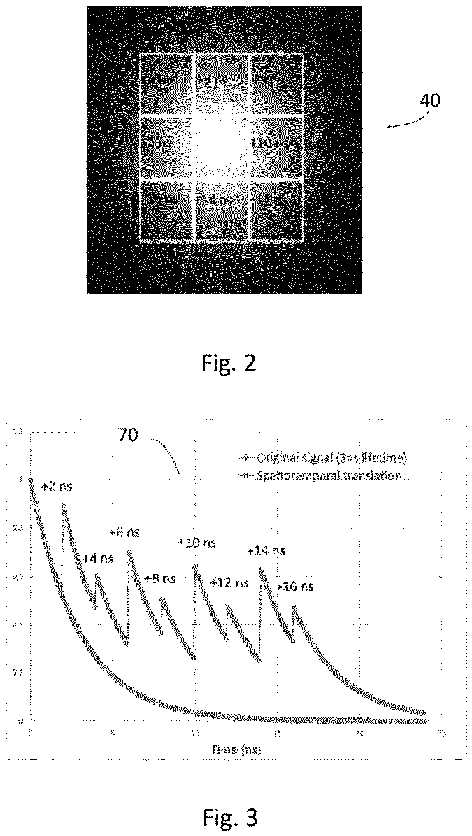

The microscope may further comprise zoom optics 28. The zoom optics 28 project the detection light beam 21 onto a microlens array 40 (shown in more detail in Fig. 2) comprising a plurality of microlenses 40a. The plurality of microlenses 40a are spatially arranged within the microlens array 40 to form a two-dimensional array. The microlens array 40 is arranged transversely to the detection beam path 20. The microlenses 40a are schematically represented in Fig. 2 by a grid of rectangles. The shape of ones of the microlenses 40a may be substantially hexagonal or circular, but is not limited thereto.

When the detection light beam 21 impinges on the microlens array 40, the detection light beam 21 is split into a plurality of signal beams 22. The plurality of signal beams 22 have time courses that correspond to the time course of the light emitted by the sample 5 from the imaged illumination point 12. Ones of the plurality of signal beams 22 have a distinct amplitude corresponding to the position of the associated one of the plurality of microlenses 40a in the microlens array 40.

The plurality of microlenses 40a of the microlens array 40 are optically coupled to the detector 50 via an associated one of a plurality of optical fibers 45. The plurality of microlenses 40a thus direct the associated one of the plurality of signal beams 22 into the associated one of the plurality of optical fibers 45. Ones of the plurality of optical fibers 45 may be multimode optical fibers.

The optical fibers 45 are associated with optical path lengths. The plurality of optical fibers 45 provide light paths 45 having the optical path lengths. Ones of the plurality of signal beams 22 travel along the associated one of the plurality of optical fibers 45 for a distinct length of travel time. The travel time is determined by the optical path length of the associated optical fiber 45. The optical path lengths differ with respect to a base optical path length by distances (or length differences) *Δsᵢ.* The distances *Δsᵢ* differ from one another. The distances *Δsᵢ* may be individually chosen. As a result, the plurality of optical fibers 45 provide a plurality of optical delay lines with differing travel time delays *Δtᵢ.* The plurality of optical fibers 45 thus performs a spatiotemporal conversion of spatial information contained in the detection light beam 21 into temporal information contained in the plurality of signal beams 22 (and subsequently in a converted detection light beam 24, as detailed below).

In one aspect of the disclosure, the distances *Δsᵢ* are individually chosen. The distances *Δsᵢ* may be individually chosen based on properties of the detection light beam 24, for example, but not limited to, the cross-sectional intensity distribution. For example, in the case of the detector 50 covering a marginal region of a intensity distribution of the detection light beam 24, the distances *Δsᵢ* may be chosen to be smaller than for a center region of the detection light beam 24. The intensity of the intensity distribution at the marginal region may be lower than at the central region of the intensity distribution.

In another aspect of the disclosure, the distances *Δsᵢ* are equal to integer multiples *nᵢ* × *Δs* of a unit distance (or length difference) *Δs*. The unit length difference *Δs* may, for example, be approximately 20cm but is not limited thereto. In other words, two of the plurality of signal beams 22 reach the end of the associated ones of the plurality of optical fibers 45 with a travel time delay that is an integer multiple of a unit time difference *Δt*. The travel time difference may, for example, be in a range of a few nanoseconds, e.g., between 2 and 3 ns, but the time difference is not limited thereto.

The ends of the plurality of optical fibers 45 may be combined in a fiber bundle. The fiber bundle (or the bundling) in combination with an imaging lens 23 enables combining the plurality of signal beams 22 onto the detector 50, which may be a single point detector or a spectrally separated array of point detectors. The imaging lens 23 may demagnify an output of the fiber bundle, e.g., some or all of the plurality of signal beams 22, onto the detector 50.

The plurality of signal beams 22 is combined into a converted detection light beam 24. The converted detection light beam 24 comprises the plurality of signal beams 22, wherein ones of the plurality of signal beams 22 are time-shifted from other ones (e.g. adjacent ones) of plurality of signal beams 22. The time-shift depends on the difference in the optical path length, i.e., the distances *Δsᵢ*, of the ones of the plurality of optical fibers 45. In this way, the converted detection light beam 24 provides a temporal encoding of the spatial information contained in the plurality of signal beams 22. The converted detection light beam 24 comprises a series of fluorescence time decay profiles.

The converted detection light beam 24 is directed onto the detector 50. The detector 50 may be a single-point or single-channel detector. Single-channel or single-point detectors 50 may have one or more active sensing elements. Photons reaching the single-point detector 50 within an operating wavelength range of the single-point detector 50 are absorbed by the active material of the single-point detector and encoded as an output signal, e.g., an electrical output signal. The detector 50 outputs the output signal generated from the converted detection light beam 24.

Examples of the single-point detector 50 include, but are not limited to, a photomultiplier tube or a semiconductor photodiode, e.g., an avalanche photodiode, a single-photon avalanche diode, or a GaAsP detector. In one aspect of the disclosure, the single-point detector 50 may be cooled to reduce a dark current and associated shot noise in the detector 50. The single point detector 50 may be a hybrid detector and comprise a combination of one or more of the photomultiplier tube, the avalanche photodiode, the single-photon avalanche diode, or the GaAsP detector.

The microscope 1 may further comprise a processor (not shown). In one aspect of the invention, the processor may be a part of the detector 50. In another aspect, the processor may a part of a data processing module (not shown) comprising software and hardware adapted to process the output signal. The processor is configured to process the output signal from the detector 50 to generate output data 70. The output data 70 may be subject to a method of time-correlated single photon counting (TCSPC).

The output data 70 (shown in Fig. 3) contains several curves having lifetime decay rates and amplitudes. In one aspect, the lifetime decay rates are substantially equal when the output data 70 are based on the fluorescence from one type of fluorophore in the sample. The amplitudes represent an amount of signal collected by individual ones of the microlenses 40a in the two-dimensional microlens array 40. The amplitudes are shifted by the time delays *Δtᵢ* introduced by the plurality of optical fibers 45 differing in the optical path lengths by distances (or lengths) *Δsᵢ*.

The output data 70 comprising the temporal fluorescence decay profiles are decomposed by the processor to extract intensity distribution data that enable reconstructing the spatial intensity distribution of the detection light beam 21. The intensity distribution data are further processed using methods known in the field of image scanning microscopy such as deconvolution and pixel-reassignment. The decomposing provides the intensity distribution (across the plurality of signal beams 22 or, in other words, the two-dimensional microlens array 40) and lifetime information at an improved resolution (for the imaged point of the sample 5).

Decomposition of the output data 70 comprises extracting the intensity distribution for ones 40a of the two-dimensional microlens array 40. The decomposition enables reconstructing spatial information contained in the detection light beam 21 (in the "original" single point image before splitting the detection light beam 21 into the plurality of signal beams 22) by TCSPC analysis. The decomposition enables reconverting the time-coded information back into spatial information corresponding to the spatial information contained in the detection light beam 21.

The afore-mentioned steps of processing the output data 70 can be done in different ways. If the fluorescence decay profiles associated with individual ones of the plurality of optical fibers 45 do not overlap, portions of the output data 70 are time-gated and integrated.

In the case of overlapping fluorescence decay profiles associated with individual ones of the plurality of optical fibers 45, the processing may comprise curve-fitting. Processing the output data 70 using curve-fitting enables increasing a speed of processing the output data 70. The curve-fitting may comprise representing the converted detection light beam 24 as a sum of fluorescence decay profiles which are time-shifted by the time delays introduced by the differing optical path lengths of the optical fibers 45. The curve-fitting may further comprise multiplying the fluorescence decay profiles with optimized amplitude factors to estimate the intensity distribution.

Decomposition approaches may vary in their robustness depending on the following factors: Delay intervals (small delays create signal overlap) as well as photon and detector noise. Multiple ways of signal reconstruction are feasible and can build on the fact that the known signal delays (given by fiber length) and global lifetime information (for the whole image field) can be used in the extraction. Image pixel-based lifetime information may not be needed and a focus on intensity extraction may convey additional robustness under fast and/or low intensity imaging conditions.

The photon numbers per pixel may not be sufficient for extraction of the overlaid intensity information. Known results [5] show that single-pixel lifetime information can generally be extracted. Advanced fitting approaches that take into account pre-existing information (fiber induced delays, global image lifetime) should allow to possibly even get more accurate intensities than based on photon numbers alone. Optimization of delay/signal overlap and number of fiber inputs need to be considered, e.g. in the form of a quadrant detector approach [6].

As the fluorescence is emitted by the sample 5, the reflected excitation pulse from the light source might be time-delayed. Reflection artifacts may therefore appear inside the total detection window preceding the subsequent fluorescence signal. The use of excitation notch filters and/or time-gating may be chosen to reject the reflection signal.

It is known that time-correlated single photon counting (TCSPC) may require long integration times and very low photon fluxes to accurately detect single photon events. Fast TCSPC technology, as for example the recently developed Falcon detector [7], may be chosen to efficiently implement the method of the present invention.

In a further aspect of the invention, shown in Fig. 4, the microscope 1 may further comprise an optic 29 for de-zooming and/or collimating the converted detection light beam 24.

The microscope may further comprise a dispersive element 27 arranged in the detection light path 20 for spectrally dispersing the converted detection light beam 24. This results in a spectrally dispersed converted detection light beam 25. The dispersive element 27 may be arranged along the detection light path 20 at a position after the plurality of signal beams 22 is combined into the converted detection light beam 24. The dispersive element 27 may be a grating or a prism 27 for spectrally dispersing the converted detection light beam 24. The spectral dispersion enables selecting one or more spectral bandwidths of frequencies from the converted detection light beam 24. The spectral dispersion facilitates imaging the sample 5 in case several types of fluorophore, fluorescing at different frequencies, are present in the sample 5

The selection may be done by means of a configurable spectral selector 47. The spectral selector 47 provides an upper frequency or wavelength cutoff and a lower frequency or wavelength cutoff. Light of the detection light beam 24 having frequencies or wavelengths within a range defined by the upper cutoff and lower cutoff is passed to the detector 50 by the spectral selector 47. Light of the detection light beam 24 having frequencies or wavelengths outside the range defined by the upper and lower cutoffs is optionally passed on to another one of the detector 50.

In the aspect of the disclosure shown in Fig. 4, the microscope 1 comprises two detectors 50 (two spatially separated point detectors, the spatial separation resulting in spectral separation). Both of the two detectors 50 may be single-point detectors. As shown, the two detectors 50 may be configured to collect different spectral ranges of the spectrally dispersed converted detection light beam 24. The two detectors 50 may be positioned at different positions along a light path of the spectrally dispersed converted detection light beam 25.

As described above, the converted detection light beam 24 contains the temporally coded spatial information contained in the detection light beam 21 or in the plurality of signal beams 22. The temporal coding of the spatial information of the detection light beam 24 is maintained in the spectrally dispersed converted detection light beam 25.

Furthermore, in this aspect, the microscope may comprise several ones of the detector 50. This enables detecting the converted detection light beam 24 in several ones of the one or more bandwidths of frequencies.

### List of reference numerals

- 1: Microscope
- 5: Sample
- 10: Illumination light path
- 11: Illumination light beam
- 20: Detection light path
- 21: Detection light beam
- 22: Signal beams
- 23: Fiber bundle imaging lens
- 24: Converted detection light beam
- 25: Spectrally dispersed converted detection light beam
- 28: Zoom optics
- 30: Objective lens
- 40: Microlens array
- 40a: Microlens
- 45: Optical fibers
- 47: Spectral selector
- 50: Detector
- 70: Output data
- 80: Light source
- *Δsᵢ*: Length difference
- *Δtᵢ*: Time difference

### Bibliography

[1] Bertero et al. (1987) "Super-resolution in confocal scanning microscopy" Inverse Problems 3 pp. 195-212
[2] Sheppard (1988) "Super-resolution in confocal imaging" Optik, 80 (2) pp. 53-54
[3] Mueller and Enderlein (2010) "Image Scanning Microscopy" Physical Review Letters, 104, 198101
[4] Huff et al. (2015) "The Airyscan Detector from ZEISS" Technology Note
[5] Castello et al. (2019) "A robust and versatile platform for image scanning microscopy enabling super-resolution FLIM" Nat. Meth. 16 pp. 175-178
[6] Castello et al. (2015) "Image scanning microscopy with a quadrant detector" Optics Letters 40 (22) pp. 5355-5358
[7] Alvarez et al. (2019) "SP8 FALCON: a novel concept in fluorescence lifetime imaging enabling video-rate confocal FLIM" Nat. Meth. Application Note Oct 2019

## Claims

1. A microscope (1) for point scanning a probe (5), the microscope (1) comprising
- an illumination light path (10) for directing at least one illumination beam (11) to the sample (5);
- a detection light path (20) for directing a detection light beam (21) from the sample (5) to a detector (50);
wherein
- a microlens array (40), comprising a plurality of microlenses (40a), is arranged in the detection light path (20);
- ones of the plurality of microlenses (40a) of the microlens array (40) are optically coupled to the detector (50) via an associated one of a plurality of optical fibers (45); and
- ones of the plurality of optical fibers (45) have an optical path length, the optical path lengths of ones of the plurality of optical fibers (45) differing by distances (*Δsᵢ*).

2. The microscope (1) of claim 1, wherein the distances (*Δsᵢ*) are individually chosen dependent on the detection light beam (21).

3. The microscope (1) of claim 1, wherein the optical path lengths differ by an integer multiple of a unit length difference (*Δs*).

4. The microscope (1) of any one of claims 1 to 3, wherein the detector (50) is a single-point or single-channel detector.

5. The microscope (1) of claim 4, wherein the single point detector (50) comprises one of a photomultiplier tube, an avalanche photodiode, a single-photon avalanche diode, a GaAsP detector, or a combination thereof.

6. The microscope (1) of one of claims 1 to 5, wherein the microscope further comprises a processor configured to process an output signal of the detector (50) for time-correlated single photon counting.

7. The microscope (1) of any one of claims 1 to 6, further comprising a light source configured to provide the illumination light beam (11) in the form of at least one laser pulse.

8. The microscope (1) of claim 7, wherein the light source is configured to generate the at least one laser pulse at a repetition rate of smaller than or equal to 80 MHz.

9. The microscope (1) of any one of claims 1 to 8, further comprising a dispersive element (27) arranged in the detection light path (20).

10. A method of imaging a sample (5), the method comprising
- illuminating a sample (5) with an illumination light beam (11);
- collecting a detection light beam (21) from the sample (5);
- splitting the detection light beam (21) into a plurality of signal beams (22);
- guiding ones of the plurality of signal beams (22) along an associated one of a plurality of light paths (45), wherein the plurality of light paths (45) have an optical path length, the optical path lengths differing between ones of the plurality of optical paths (45) by distances (*Δsᵢ*);
- recombining the plurality of signal beams (22) into a converted detection light beam (24);
- directing the converted detection light beam (24) into a detector (50) to generate an output signal;
- processing the output signal from the detector, using the method of time-correlated single photon counting, and
- decomposing the processed output signal to image the sample (5).

11. The method of claim 10, further comprising selecting the distances (*Δsᵢ*) individually dependent on the detection light beam (21).

12. The method of claim 10 or 11, wherein the optical path lengths differ by an integer multiple of a unit length difference by lengths (*Δs*).

13. The method of any of claims 10 to 12, further comprising processing an output signal of the detector (50) to achieve time-correlated single photon counting.

14. The method of any one of claims 10 to 13, wherein the illuminating comprises providing the illumination beam (11) in the form of at least one laser pulse.

15. The method of claim 14, further comprising generating the at least one laser pulse at a repetition rate of smaller than or equal to 80 MHz.

16. The method of any one of claims 10 to 15, further comprising spectrally dispersing the converted detection light beam (24).
